# EUROPÄISCHE PATENTSCHRIFT

(11) **EP 3 253 988 B1**
(45) Veröffentlichungstag und Bekanntmachung des Hinweises auf die Patenterteilung: **31.07.2019**
(21) Anmeldenummer: 16704387.6
(22) Anmeldetag: 20.01.2016
(51) Int. Cl.: F16F 15/14

(54) **FLIEHKRAFTPENDELEINRICHTUNG UND DREHSCHWINGUNGSDÄMPFER**
CENTRIFUGAL PENDULUM DEVICE AND ROTARY VIBRATION DAMPER
DISPOSITIF PENDULAIRE À FORCE CENTRIFUGE ET AMORTISSEUR DE VIBRATIONS DE TORSION

(30) Priorität: 03.02.2015 DE 102015201801
(43) Veröffentlichungstag der Anmeldung: 13.12.2017
(73) Patentinhaber: Schaeffler Technologies AG & Co. KG, 91074 Herzogenaurach (DE)
(72) Erfinder: MENDE, Hartmut, 77815 Bühl (DE); EIREINER, Dieter, 75179 Pforzheim (DE)
(86) Internationale Anmeldenummer: PCT/DE2016/200024
(87) Internationale Veröffentlichungsnummer: WO 2016/124182

(56) Entgegenhaltungen:
- DE-A1-102009 042 836
- DE-A1-102010 011 824
- DE-A1-102014 011 391
- DE-U1-202011 004 695
- FR-A1- 2 990 734

## Beschreibung

Die Erfindung betrifft eine Fliehkraftpendeleinrichtung, insbesondere für einen Antriebsstrang eines brennkraftmaschinengetriebenen Kraftfahrzeugs, die Fliehkraftpendeleinrichtung aufweisend eine Drehachse, einen um die Drehachse drehbaren Pendelmasseträger und wenigstens eine mithilfe von Pendelrollen an dem Pendelmasseträger verlagerbar angeordnete Pendelmasse, die wenigstens eine Pendelmasse aufweisend ein erstes Ende, ein zweites Ende und zwischen den Enden angeordnete Ausnehmungen für die Pendelrollen, die Fliehkraftpendeleinrichtung aufweisend axial zwischen dem Pendelmasseträger und der wenigstens einen Pendelmasse angeordnete Abstandselemente. Außerdem betrifft die Erfindung einen Drehschwingungsdämpfer, insbesondere Zweimassenschwungrad, aufweisend ein Eingangsteil, ein Ausgangsteil, eine Drehachse, um die das Eingangsteil und das Ausgangsteil zusammen drehbar und relativ zueinander begrenzt verdrehbar sind und eine zwischen dem Eingangsteil und dem Ausgangsteil wirksame Feder-Dämpfer-Einrichtung.

Aus der DE 10 2009 042 836 A1 ist ein Fliehkraftpendel bekannt für eine Drehmomentübertragungseinrichtung mit einem mit einem Bauteil der Drehmomentübertragungseinrichtung fest verbundenen Pendelflansch und einer Mehrzahl von über den Umfang verteilten und auf beiden Seiten des Pendelflansches gegenüber diesem begrenzt verschwenkbaren Pendelmassen, wobei jeweils zwei axial gegenüberliegende Pendelscheiben mittels zumindest eines Verbindungselements zu einer Pendelmasse verbunden sind und die axial gegenüberliegenden Pendelscheiben jeweils zwei voneinander in Umfangsrichtung beabstandete Ausschnitte mit ersten Laufbahnen und der Pendelflansch hierzu komplementäre Ausschnitte mit zweiten Laufbahnen aufweisen, auf denen jeweils ein einer ersten und zweiten Laufbahn zugeordneter Wälzkörper abwälzt, bei dem das zumindest eine Verbindungselement in Umfangsrichtung betrachtet zwischen den Laufbahnen der Pendelmassen angeordnet ist. Eine axiale Beabstandung der Pendelscheiben gegenüber dem Pendelflansch erfolgt mittels Abstandshaltern, die mit den Pendelscheiben verbunden werden.

Der Erfindung liegt die Aufgabe zugrunde, eine eingangs genannte Fliehkraftpendeleinrichtung baulich und/oder funktional zu verbessern. Außerdem liegt der Erfindung die Aufgabe zugrunde, einen eingangs genannten Drehschwingungsdämpfer baulich und/oder funktional zu verbessern. Insbesondere soll eine Wirksamkeit verbessert werden. Insbesondere soll ein unbeabsichtigter Kontakt zwischen dem Pendelmasseträger und der wenigstens einen Pendelmasse vermieden werden. Insbesondere soll eine Anordnung der Abstandselemente verbessert werden. Insbesondere soll eine Auslegung der Abstandselemente verbessert werden. Insbesondere soll zwischen dem Pendelmasseträger und der wenigstens einen Pendelmasse ein vorgegebener Reibwert herstellbar sein. Insbesondere soll zwischen dem Pendelmasseträger und der wenigstens einen Pendelmasse ein vorgegebener axialer Abstand herstellbar sein.

Die Aufgabe wird gelöst mit einer Fliehkraftpendeleinrichtung, insbesondere für einen Antriebsstrang eines brennkraftmaschinengetriebenen Kraftfahrzeugs, die Fliehkraftpendeleinrichtung aufweisend eine Drehachse, einen um die Drehachse drehbaren Pendelmasseträger und wenigstens eine mithilfe von Pendelrollen an dem Pendelmasseträger verlagerbar angeordnete Pendelmasse, die wenigstens eine Pendelmasse aufweisend ein erstes Ende, ein zweites Ende und zwischen den Enden angeordnete Ausnehmungen für die Pendelrollen, die Fliehkraftpendeleinrichtung aufweisend axial zwischen dem Pendelmasseträger und der wenigstens einen Pendelmasse angeordnete Abstandselemente, bei der zwischen einer ersten Ausnehmung und dem ersten Ende erste Abstandselemente, zwischen einer zweiten Ausnehmung und dem zweiten Ende zweite Abstandselemente und zwischen den Ausnehmungen keine Abstandselemente angeordnet sind.

Die Fliehkraftpendeleinrichtung kann zur Anordnung an einem Antriebsstrang eines Kraftfahrzeugs dienen. Der Antriebsstrang kann eine Brennkraftmaschine aufweisen. Die Brennkraftmaschine kann eine Kurbelwelle aufweisen. Der Antriebsstrang kann ein Einmassenschwungrad aufweisen. Der Antriebsstrang kann einen Drehschwingungsdämpfer, insbesondere ein Zweimassenschwungrad, aufweisen. Der Antriebsstrang kann eine Reibungskupplungseinrichtung aufweisen. Der Antriebsstrang kann einen hydrodynamischen Drehmomentwandler aufweisen. Der Antriebsstrang kann ein Getriebe aufweisen. Der Antriebsstrang kann wenigstens ein antreibbares Fahrzeugrad aufweisen. Der Antriebsstrang kann einen Nebenaggregatantrieb aufweisen. Die Fliehkraftpendeleinrichtung kann dazu dienen, Drehschwingungen zu tilgen. Die Fliehkraftpendeleinrichtung kann zur Anordnung an dem Einmassenschwungrad dienen. Die Fliehkraftpendeleinrichtung kann zur Anordnung an dem Drehschwingungsdämpfer, insbesondere an dem Zweimassenschwungrad, dienen. Die Fliehkraftpendeleinrichtung kann zur Anordnung an der Reibungskupplungseinrichtung dienen. Die Fliehkraftpendeleinrichtung kann zur Anordnung an dem hydrodynamischen Drehmomentwandler dienen. Die Fliehkraftpendeleinrichtung kann zur Anordnung an dem Nebenaggregatantrieb dienen. Die Fliehkraftpendeleinrichtung kann zur Anordnung an der Kurbelwelle der Brennkraftmaschine dienen.

Die wenigstens eine Pendelmasse kann an dem Pendelmasseträger entlang einer Pendelbahn verlagerbar angeordnet sein. Die wenigstens eine Pendelmasse kann mit dem Pendelmasseträger bifilar verbunden sein. Die wenigstens eine Pendelmasse kann unter Fliehkrafteinwirkung in eine Betriebsstellung verlagerbar sein. In der Betriebsstellung kann die wenigstens eine Pendelmasse unter Einwirkung von Drehschwingungen verlagerbar sein. In der Betriebsstellung kann die wenigstens eine Pendelmasse verlagerbar sein, um Drehschwingungen zu tilgen. Die wenigstens eine Pendelmasse kann ausgehend von einer Mittellage zwischen zwei Endlagen verlagerbar sein.

Der Pendelmasseträger kann eine scheibenartige oder ringscheibenartige Form aufweisen. Der Pendelmasseträger kann einteilig ausgeführt sein. Der Pendelmasseträger kann eine flanschartige Form aufweisen. Der Pendelmasseträger kann einen einzigen Trägerflansch aufweisen. Der einzige Trägerflansch kann zur beidseitigen Anordnung von Pendelmassen dienen. Der Pendelmasseträger kann mehrteilig ausgeführt sein. Der Pendelmasseträger kann eine doppelflanschartige Form aufweisen. Der Pendelmasseträger kann einen ersten Trägerflansch und einen zweiten Trägerflansch aufweisen. Der erste Trägerflansch und der zweite Trägerflansch können zueinander parallel und voneinander axial beabstandet angeordnet sein. Der erste Trägerflansch und der zweite Trägerflansch können miteinander fest verbunden, insbesondere vernietet, sein. Der erste Trägerflansch und der zweite Trägerflansch können einen Aufnahmeraum für die wenigstens eine Pendelmasse begrenzen.

Die wenigstens eine Pendelmasse kann zur Drehachse exzentrisch angeordnet sein. Die wenigstens eine Pendelmasse kann eine bogenartige Form aufweisen. Die wenigstens eine Pendelmasse kann eine radial äußere Kontur aufweisen. Die radial äußere Kontur kann eine kreisbogenartige Form aufweisen. Die kreisbogenartige Form der radial äußeren Kontur kann einen Mittelpunkt aufweisen. Die wenigstens eine Pendelmasse kann eine radial innere Kontur aufweisen. Die radial innere Kontur kann eine kreisbogenartige Form aufweisen. Die kreisbogenartige Form der radial inneren Kontur kann einen kleineren Radius als die kreisbogenartige Form der radial äußeren Kontur aufweisen. Die kreisbogenartige Form der radial inneren Kontur kann einen Mittelpunkt aufweisen. Der Mittelpunkt der kreisbogenartigen Form der radial inneren Kontur kann zumindest annähernd dem Mittelpunkt der kreisbogenartigen Form der radial äußeren Kontur entsprechen. Das erste Ende und das zweite Ende der wenigstens einen Pendelmasse können Kreisbogenenden zugeordnet sein. Das erste Ende und das zweite Ende der wenigstens einen Pendelmasse können in Umfangsrichtung der Fliehkraftpendeleinrichtung gerichtete Enden sein. Die wenigstens eine Pendelmasse kann eine axiale Pendelmassendicke (X) aufweisen.

Die wenigstens eine Pendelmasse kann in dem von den Trägerflanschen begrenzten Aufnahmeraum angeordnet sein. Jeweils zwei Pendelmassen können miteinander fest verbunden, insbesondere vernietet, sein. Die miteinander fest verbundenen Pendelmassen können zueinander parallel und voneinander axial beabstandet angeordnet sein. Die miteinander fest verbundenen Pendelmassen können beidseits des Pendelmasseträgers angeordnet sein. Die miteinander fest verbundenen Pendelmassen können ein Pendelmassenpaar bilden. Die Fliehkraftpendeleinrichtung kann mehrere, beispielsweise vier, Pendelmassen oder Pendelmassenpaare aufweisen.

Die wenigstens eine Pendelmasse kann an dem Pendelmasseträger mithilfe mehrerer Pendelrollen verlagerbar angeordnet sein. Die wenigstens eine Pendelmasse kann an dem Pendelmasseträger mithilfe von zwei Pendelrollen verlagerbar angeordnet sein. Der Pendelmasseträger kann Ausnehmungen zur Aufnahme der Pendelrollen aufweisen. Die Ausnehmungen des Pendelmasseträgers können jeweils eine nierenartige Form aufweisen. Die Ausnehmungen der wenigstens einen Pendelmasse können jeweils eine nierenartige Form aufweisen.

Die wenigstens eine Pendelrolle kann eine zylinderartige Form aufweisen. Die wenigstens eine Pendelrolle kann wenigstens einen dem Pendelmasseträger zugeordneten Abschnitt und wenigstens einen der wenigstens einen Pendelmasse zugeordneten Abschnitt aufweisen. Die wenigstens eine Pendelrolle kann einen Mittelabschnitt und zwei Endabschnitte aufweisen. Die wenigstens eine Pendelrolle kann an dem Mittelabschnitt einen größeren Durchmesser und an den Endabschnitten einen kleineren Durchmesser aufweisen. Die wenigstens eine Pendelrolle kann Bunde aufweisen. Die Bunde können zwischen den Endabschnitten und dem Mittelabschnitt angeordnet sein. Die wenigstens eine Pendelrolle kann an den Bunden einen größeren Durchmesser als an den Endabschnitten und dem Mittelabschnitt aufweisen.

Die Abstandselemente können jeweils eine stopfenartige Form aufweisen. Die Abstandselemente können jeweils einen Kopfabschnitt und einen Fußabschnitt aufweisen. Die Kopfabschnitte können jeweils eine scheibenartige Form aufweisen. Die Fußabschnitte können jeweils eine zylinderartige Form aufweisen. Die Abstandselemente können jeweils an dem Kopfabschnitt einen größeren Durchmesser als an dem Fußabschnitt aufweisen. Die Abstandselemente können jeweils eine Wirkfläche aufweisen. Der Kopfabschnitt kann eine ebene Kopffläche aufweisen. Die Kopffläche kann kreisförmig sein. Die Kopffläche kann die Wirkfläche bilden. Die Abstandselemente können an dem Pendelmasseträger angeordnet sein. Die Abstandselemente können an der wenigstens einen Pendelmasse angeordnet sein. Der Pendelmasseträger und/oder die wenigstens eine Pendelmasse können/kann Aufnahmen für die Abstandselemente aufweisen. Die Aufnahmen für die Abstandselemente können jeweils als Kreisloch ausgeführt sein. Die Aufnahmen für die Abstandselemente können jeweils einen dem Durchmesser des Fußabschnitts eines Abstandselements entsprechenden Durchmesser aufweisen. Die Abstandselemente können mit dem Pendelmasseträger und/oder mit der wenigstens einen Pendelmasse kraftschlüssig, formschlüssig und/oder stoffschlüssig verbunden sein. Die Abstandselemente können mit dem Pendelmasseträger und/oder mit der wenigstens einen Pendelmasse durch elastisches und/oder plastisches Umformen verbunden sein. Die Abstandselemente können aus einem faserverstärkten Kunststoff hergestellt sein.

Zwischen der ersten Ausnehmung und dem ersten Ende können zwei erste Abstandselemente angeordnet sein. Zwischen der zweiten Ausnehmung und dem zweiten Ende können zwei zweite Abstandselemente angeordnet sein. Die ersten Abstandselemente können auf einer ersten Geraden angeordnet sein. Die zweiten Abstandselemente können auf einer zweiten Geraden angeordnet sein. Die erste Gerade und die zweite Gerade können sich in einem Schnittpunkt schneiden. Der Mittelpunkt der kreisbogenartig geformten radial äußeren Kontur der wenigstens einen Pendelmasse kann zumindest annähernd dem Schnittpunkt der ersten und der zweiten Geraden entsprechen.

Der Pendelmasseträger bzw. die wenigstens eine Pendelmasse und die Wirkflächen können axial mit einem Abstand (L) voneinander beabstandet sein. Die Abstandselemente können jeweils eine axiale Abstandsdicke (S) aufweisen. Die axiale Abstandsdicke (S) der Abstandselemente kann jeweils einer Dicke des scheibenartigen Kopfabschnitts entsprechen. Der Abstand (L) kann das ca. 0,7- bis ca. 1,5-fache der Abstandsdicke (S) betragen. Der Abstand (L) kann mindestens das ca. 0,7-fache der Abstandsdicke (S) betragen. Der Abstand (L) kann maximal das ca. 1,5-fache der Abstandsdicke (S) betragen.

Die Wirkflächen aller zwischen dem Pendelmasseträger und der wenigstens einen Pendelmasse angeordneten Abstandselemente kann eine Gesamtfläche von ca. π cm² aufweisen. Die Wirkflächen aller zwischen dem Pendelmasseträger und der wenigstens einen Pendelmasse angeordneten Abstandselemente kann eine Gesamtfläche von ca. 3,1216 cm² aufweisen. Die Gesamtfläche kann toleranzbedingt um ca. +/-10% variieren.

Ein Verhältnis von Pendelmassendicke (X) der wenigstens einen Pendelmasse zu Abstandsdicke (S) eines Abstandselements kann kleiner als 5,25 sein.

Die Fliehkraftpendeleinrichtung kann nur ein erstes Abstandselement aufweisen. Die Fliehkraftpendeleinrichtung kann nur ein zweites Abstandselement aufweisen. Die Abstandselemente können radial innerhalb der Ausnehmungen für die Pendelrollen angeordnet sein.

Außerdem wird die der Erfindung zugrundeliegende Aufgabe gelöst mit einem Drehschwingungsdämpfer, insbesondere Zweimassenschwungrad, aufweisend ein Eingangsteil, ein Ausgangsteil, eine Drehachse, um die das Eingangsteil und das Ausgangsteil zusammen drehbar und relativ zueinander begrenzt verdrehbar sind und eine zwischen dem Eingangsteil und dem Ausgangsteil wirksame Feder-Dämpfer-Einrichtung, wobei der Drehschwingungsdämpfer eine derartige Fliehkraftpendeleinrichtung aufweist.

Der Drehschwingungsdämpfer kann zur Anordnung in einem Antriebsstrang eines Kraftfahrzeugs dienen. Der Antriebsstrang kann eine Brennkraftmaschine aufweisen. Die Brennkraftmaschine kann eine Kurbelwelle aufweisen. Der Antriebsstrang kann eine Reibungskupplungseinrichtung aufweisen. Die Reibungskupplungseinrichtung kann ein Kupplungseingangsteil und wenigstens ein Kupplungsausgangsteil aufweisen. Der Antriebsstrang kann ein Getriebe aufweisen. Das Getriebe kann wenigstens eine Getriebeeingangswelle aufweisen. Das Getriebe kann ein Schaltgetriebe sein. Der Antriebsstrang kann ein Achsgetriebe aufweisen. Der Antriebsstrang kann wenigstens ein antreibbares Fahrzeugrad aufweisen. Der Drehschwingungsdämpfer kann zur Anordnung zwischen der Brennkraftmaschine und der Reibungskupplungseinrichtung dienen. Der Drehschwingungsdämpfer kann dazu dienen, Drehschwingungen zu reduzieren, die durch periodische Vorgänge, insbesondere in der Brennkraftmaschine, angeregt werden. Die Fliehkraftpendeleinrichtung kann dazu dienen, eine Wirksamkeit des Drehschwingungsdämpfers zu verbessern.

Die Feder-Dämpfer-Einrichtung kann eine Federeinrichtung aufweisen. Die Federeinrichtung kann wenigstens einen Energiespeicher aufweisen. Der wenigstens eine Energiespeicher kann sich einerseits an dem Eingangsteil und andererseits an dem Ausgangsteil abstützen. Der wenigstens eine Energiespeicher kann eine Schraubenfeder sein. Der wenigstens eine Energiespeicher kann eine Druckfeder sein. Der wenigstens eine Energiespeicher kann eine Bogenfeder sein. Die Feder-Dämpfer-Einrichtung kann eine Reibeinrichtung aufweisen. Das Eingangsteil kann zur Antriebsverbindung mit der Brennkraftmaschine dienen. Das Ausgangsteil kann zur Antriebsverbindung mit der Reibungskupplung dienen. Die Begriffe "Eingangsteil" und "Ausgangsteil" sind auf eine von der Brennkraftmaschine ausgehende Leistungsflussrichtung bezogen.

Das Eingangsteil kann einen Flanschabschnitt aufweisen. Das Eingangsteil kann einen Deckelabschnitt aufweisen. Der Flanschabschnitt und der Deckelabschnitt können einen Aufnahmeraum für den wenigstens einen Energiespeicher begrenzen. Der Aufnahmeraum kann eine torusartige Form aufweisen. Das Eingangsteil kann in den Aufnahmeraum ragende Abstützabschnitte für den wenigstens einen Energiespeicher aufweisen. Das Ausgangsteil kann ein Flanschteil aufweisen. Das Flanschteil kann axial zwischen dem Flanschabschnitt und dem Deckelabschnitt angeordnet sein. Das Flanschteil kann nach radial außen ragende Fortsätze aufweisen. Die Fortsätze können in den Aufnahmeraum ragen. Die Fortsätze können als ausgangsteilseitige Abstützabschnitte für den wenigstens einen Energiespeicher dienen. Das Ausgangsteil kann ein Nabenteil aufweisen. Das Nabenteil kann im Wesentlichen radial innenseitig des Flanschteils angeordnet sein. Das Flanschteil und das Nabenteil können miteinander fest verbunden, insbesondere vernietet, sein. Der Drehschwingungsdämpfer kann eine Lagereinrichtung zur gegenseitigen verdrehbaren Lagerung des Eingangsteils und des Ausgangsteils aufweisen.

Zusammenfassend und mit anderen Worten dargestellt ergibt sich somit durch die Erfindung unter anderem eine optimierte Fliehkraftpendelausführung. Ein Fliehkraftpendel kann so ausgeführt werden, dass wichtige Parameter, wie beispielsweise "Beabstandung Pendelmasse zu Flansch", Fläche und Anordnung von Abstandselementen aus Kunststoff, in optimalem Verhältnis zueinander stehen.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der Erfindung wird eine Wirksamkeit verbessert. Ein unbeabsichtigter Kontakt zwischen dem Pendelmasseträger und der wenigstens einen Pendelmasse wird vermieden. Eine Anordnung der Abstandselemente wird verbessert. Eine Auslegung der Abstandselemente wird verbessert. Zwischen dem Pendelmasseträger und der wenigstens einen Pendelmasse ist ein vorgegebener Reibwert herstellbar. Zwischen dem Pendelmasseträger und der wenigstens einen Pendelmasse ist ein vorgegebener axialer Abstand herstellbar.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine Fliehkraftpendeleinrichtung mit einem Pendelmasseträger, Pendelmassen, einer Pendelrolle und Abstandselementen,
- Fig. 2: eine Pendelmasse mit auf Radien angeordneten Abstandselementen,
- Fig. 3: eine Pendelmasse mit einem Abstandselement in Schnittansicht,
- Fig. 4: eine Pendelmasse mit Abstandselementen mit Wirkflächen und
- Fig. 5: eine Pendelmasse mit einer reduzierten Anzahl von Abstandselementen.

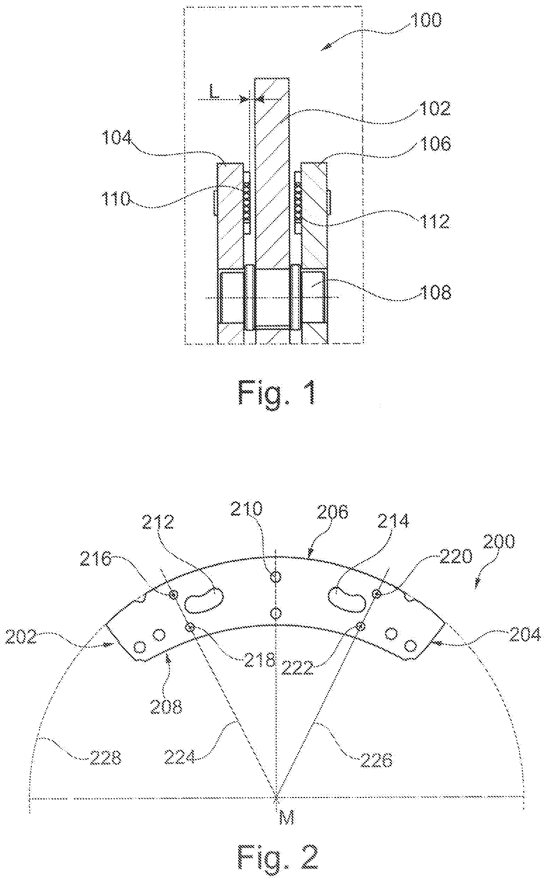

Fig. 1 zeigt ausschnittsweise eine Fliehkraftpendeleinrichtung 100 mit einem Pendelmasseträger 102, Pendelmassen 104, 106, einer Pendelrolle 108 zur verlagerbaren Anordnung der Pendelmassen 104, 106 an dem Pendelmasseträger 102 und Abstandselementen 110, 112.

Die Fliehkraftpendeleinrichtung 100 dient zum Tilgen von Drehschwingungen, insbesondere von Drehschwingungen in einem Antriebsstrang, die durch periodische Drehungleichförmigkeiten einer Brennkraftmaschine angeregt werden. Die Fliehkraftpendeleinrichtung 100 dient beispielsweise dazu, eine Wirksamkeit eines Zweimassenschwungrads zu verbessern. Es sind jeweils zwei Pendelmassen, wie 104, 106, mithilfe von Verbindungsbolzen zu einem Pendelmassenpaar fest miteinander verbunden. Die Pendelmassen 104, 106 eines Pendelmassenpaars sind jeweils axial beidseits des Pendelmasseträgers 102 angeordnet. Die Pendelmassenpaare sind jeweils mithilfe von zwei Pendelrollen, wie 108, mit dem Pendelmasseträger 102 bifilar verbunden. Bei einem Betrieb der Fliehkraftpendeleinrichtung 100 sind die Pendelmassen 104, 106 fliehkraftbeaufschlagt und können entlang einer Pendelbahn zwischen zwei Endlagen relativ zu dem Pendelmasseträger 102 schwingen, um Drehschwingungen zu tilgen. Das Abstandselement 110 ist an der Pendelmasse 104 angeordnet. Das Abstandselement 112 ist an der Pendelmasse 106 angeordnet. Die Abstandselemente 110, 112 dienen dazu, einen direkten Kontakt zwischen dem Pendelmasseträger 102 und den Pendelmassen 104, 106 zu verhindern. Der Pendelmasseträger 102 und die Pendelmassen 104, 106 mit den Abstandselementen 110, 112 sind jeweils axial mit einem Abstand L voneinander beabstandet.

Fig. 2 zeigt eine Pendelmasse 200 einer Fliehkraftpendeleinrichtung, wie Fliehkraftpendeleinrichtung 100 gemäß Fig. 1. Die Pendelmasse 200 weist eine bogenartige Form mit einem ersten Ende 202 und einem zweiten Ende 204 auf. Die Pendelmasse 200 weist eine radial äußere kreisbogenförmige Kontur 206 und eine radial innere kreisbogenförmige Kontur 208 auf. Die innere Kontur 208 weist einen kleineren Radius als die äußere Kontur 206 auf. Die Pendelmasse 200 weist Löcher, wie 210, zur Aufnahme von Verbindungsbolzen auf. Die Pendelmasse 200 weist eine erste nierenförmige Ausnehmung 212 und eine zweite nierenförmige Ausnehmung 214 für Pendelrollen auf.

An der Pendelmasse 200 sind erste Abstandselemente 216, 218 und zweite Abstandselemente 220, 222 angeordnet. Die ersten Abstandselemente 216, 218 sind zwischen der ersten Ausnehmung 212 und dem ersten Ende 202 angeordnet. Die zweiten Abstandselemente 220, 222 sind zwischen der zweiten Ausnehmung 214 und dem zweiten Ende 204 angeordnet. Zwischen der ersten Ausnehmung 212 und der zweiten Ausnehmung 214 sind keine Abstandselemente angeordnet. Das erste Abstandselement 216 und das zweite Abstandselement 220 sind radial außerhalb der Ausnehmungen 212, 214 angeordnet. Das erste Abstandselement 218 und das zweite Abstandselement 222 sind radial innerhalb der Ausnehmungen 212, 214 angeordnet.

Die äußere kreisbogenförmige Kontur 206 weist einen Mittelpunkt M auf. Die ersten Abstandselemente 216, 218 sind auf einer ersten Geraden 224 angeordnet. Die zweiten Abstandselemente 220, 222 sind auf einer zweiten Geraden 226 angeordnet. Die erste Gerade 224 und die zweite Gerade 226 schneiden in einem Schnittpunkt, der zugleich der Mittelpunkt M ist. Die Geraden 224, 226 sind Radien eines Kreises 228, der entlang der äußeren kreisbogenförmigen Kontur 206 verläuft. Im Übrigen wird ergänzend insbesondere auf Fig. 1 und die zugehörige Beschreibung verwiesen.

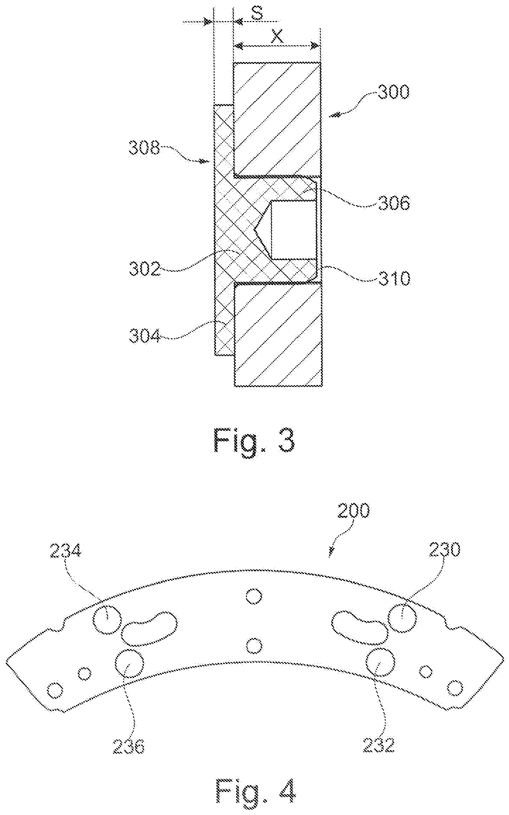

Fig. 3 zeigt eine Pendelmasse 300 mit einem Abstandselement 302 in Schnittansicht. Das Abstandselement 302 weist eine stopfenartige Form mit einem Kopfabschnitt 304 und einem Fußabschnitt 306 auf. Der Kopfabschnitt 304 weist eine scheibenartige Form mit einer Abstandsdicke S auf. Der Fußabschnitt 306 weist eine zylinderartige Form auf. Der Kopfabschnitt 304 weist einen größeren Durchmesser als der Fußabschnitt 306 auf. Das Abstandselement 302 weist eine Wirkfläche 308 auf, die mit einer ebenen kreisförmigen Kopffläche des Kopfabschnitts 304 gebildet ist. Pendelmasse 300 weist Löcher, wie 310, zur der Abstandselemente, wie 302, auf. Das Loch 310 weist einen Durchmesser auf, der einem Durchmesser des Fußabschnitts 306 entspricht. Das Abstandselement 302 ist mit der Pendelmasse 300 kraftschlüssig und formschlüssig verbunden. Dazu ist der Fußabschnitt 306 endseitig plastisch aufgeweitet. Das Abstandselement 302 ist aus einem faserverstärkten Kunststoff hergestellt.

Die Pendelmasse 300 weist eine axiale Pendelmassendicke X auf. Ein Verhältnis von Pendelmassendicke X und Abstandsdicke S des Abstandselements 302 ist kleiner als 5,25. Der Abstand L zwischen dem Pendelmasseträger und einer Wirkfläche eins an der Pendelmasse angeordneten Abstandselements beträgt mindestens das ca. 0,7-fache der Abstandsdicke S und maximal das ca. 1,5-fache der Abstandsdicke S. Im Übrigen wird ergänzend insbesondere auf Fig. 1-2 und die zugehörige Beschreibung verwiesen.

Fig. 4 zeigt die Pendelmasse 200 mit Abstandselementen. Die Abstandselemente weisen jeweils eine Wirkfläche 230, 232, 234, 236 auf. Fig. 4 zeigt die Pendelmasse 200 mit Abstandselementen mit Sicht auf die Fig. 4 zeigt die Pendelmasse 200 mit Abstandselementen. Die Wirkflächen 230, 232, 234, 236 aller Abstandselemente weisen eine Gesamtfläche von ca. π cm² entsprechend ca. 3,1216 cm² auf. Die Gesamtfläche kann toleranzbedingt um ca. +/- 10% variieren. Im Übrigen wird ergänzend insbesondere auf Fig. 1-3 und die zugehörige Beschreibung verwiesen.

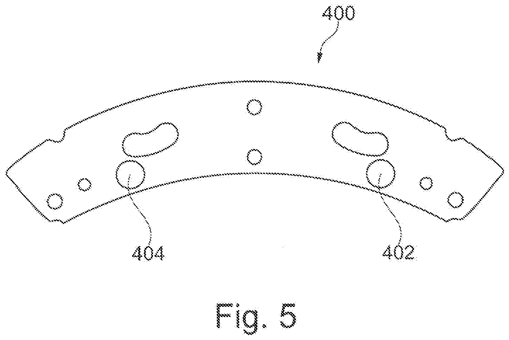

Fig. 5 zeigt eine nicht erfindungsgemäße Pendelmasse 400 mit einer reduzierten Anzahl von Abstandselementen. Die Pendelmasse 400 weist nur ein erstes Abstandselement 402 und nur ein zweites Abstandselement 404 auf. Die Abstandselemente 402, 404 sind radial innerhalb der Ausnehmungen für die Pendelrollen angeordnet. Im Übrigen wird ergänzend insbesondere auf Fig. 1-4 und die zugehörige Beschreibung verwiesen.

### Bezugszeichenliste

- 100: Fliehkraftpendeleinrichtung
- 102: Pendelmasseträger
- 104: Pendelmasse
- 106: Pendelmasse
- 108: Pendelrolle
- 110: Abstandselement
- 112: Abstandselement

- 200: Pendelmasse
- 202: erstes Ende
- 204: zweites Ende
- 206: äußere Kontur
- 208: innere Kontur
- 210: Loch
- 212: erste Ausnehmung
- 214: zweite Ausnehmung
- 216: erstes Abstandselement
- 218: erstes Abstandselement
- 220: zweites Abstandselement
- 222: zweites Abstandselement
- 224: erste Gerade
- 226: zweite Gerade
- 228: Kreis
- 230: Wirkfläche
- 232: Wirkfläche
- 234: Wirkfläche
- 236: Wirkfläche

- 300: Pendelmasse
- 302: Abstandselement
- 304: Kopfabschnitt
- 306: Fußabschnitt
- 308: Wirkfläche
- 310: Loch

- 400: Pendelmasse
- 402: erstes Abstandselement
- 404: zweites Abstandselement

## Patentansprüche

1. Fliehkraftpendeleinrichtung (100), insbesondere für einen Antriebsstrang eines brennkraftmaschinengetriebenen Kraftfahrzeugs, die Fliehkraftpendeleinrichtung (100) aufweisend eine Drehachse, einen um die Drehachse drehbaren Pendelmasseträger (102) und wenigstens eine mithilfe von Pendelrollen (108) an dem Pendelmasseträger (102) verlagerbar angeordnete Pendelmasse (104, 106, 200, 300), die wenigstens eine Pendelmasse (104, 106, 200, 300) aufweisend ein erstes Ende (202), ein zweites Ende (204) und zwischen den Enden (202, 204) angeordnete Ausnehmungen (212, 214) für die Pendelrollen (108), die Fliehkraftpendeleinrichtung (100) aufweisend axial zwischen dem Pendelmasseträger (102) und der wenigstens einen Pendelmasse (104, 106, 200, 300) angeordnete Abstandselemente (110, 112, 216, 218, 220, 222), **dadurch gekennzeichnet, dass** zwischen einer ersten Ausnehmung (212) und dem ersten Ende (202) erste Abstandselemente (216, 218), zwischen einer zweiten Ausnehmung (214) und dem zweiten Ende (204) zweite Abstandselemente (220, 222) und zwischen den Ausnehmungen (212, 214) keine Abstandselemente angeordnet sind.

2. Fliehkraftpendeleinrichtung (100) nach Anspruch 1, **dadurch gekennzeichnet, dass** zwischen der ersten Ausnehmung (212) und dem ersten Ende (202) zwei erste Abstandselemente (216, 218) und zwischen der zweiten Ausnehmung (214) und dem zweiten Ende (204) zwei zweite Abstandselemente (220, 222) angeordnet sind.

3. Fliehkraftpendeleinrichtung (100) nach wenigstens einem der vorhergehenden Ansprüche, **dadurch gekennzeichnet, dass** die ersten Abstandselemente (216, 218) auf einer ersten Geraden (224) und die zweiten Abstandselemente (220, 222) auf einer zweiten Geraden (226) angeordnet sind, sich die erste Gerade (224) und die zweite Gerade (226) in einem Schnittpunkt (M) schneiden, die wenigstens eine Pendelmasse (104, 106, 200, 300) eine radial äußere Kontur (206) mit einer kreisbogenartigen Form und einen Mittelpunkt aufweist und der Mittelpunkt zumindest annähernd dem Schnittpunkt (M) der ersten Geraden (224) und der zweiten Geraden (226) entspricht.

4. Fliehkraftpendeleinrichtung (100) nach wenigstens einem der vorhergehenden Ansprüche, **dadurch gekennzeichnet, dass** die Abstandselemente (110, 112, 216, 218, 220, 222) jeweils eine Wirkfläche (230, 232, 234, 236) aufweisen und der Pendelmasseträger (102) bzw. die wenigstens eine Pendelmasse (104, 106, 200, 300) und die Wirkflächen (230, 232, 234, 236) axial mit einem Abstand (L) voneinander beabstandet sind, die Abstandselemente (110, 112, 216, 218, 220, 222) jeweils eine axiale Abstandsdicke (S) aufweisen und der Abstand (L) das ca. 0,7- bis ca. 1,5-fache der Abstandsdicke (S) beträgt.

5. Fliehkraftpendeleinrichtung (100) nach wenigstens einem der vorhergehenden Ansprüche, **dadurch gekennzeichnet, dass** die Abstandselemente (110, 112, 216, 218, 220, 222) jeweils eine Wirkfläche (230, 232, 234, 236) aufweisen und die Wirkflächen (230, 232, 234, 236) aller zwischen dem Pendelmasseträger (102) und der wenigstens einen Pendelmasse (104, 106, 200, 300) angeordneten Abstandselemente (110, 112, 216, 218, 220, 222) eine Gesamtfläche von ca. π cm² aufweisen.

6. Fliehkraftpendeleinrichtung (100) nach wenigstens einem der vorhergehenden Ansprüche, **dadurch gekennzeichnet, dass** die wenigstens eine Pendelmasse (104, 106, 200, 300) eine axiale Pendelmassendicke (X) aufweist, die Abstandselemente (110, 112, 216, 218, 220, 222) jeweils eine axiale Abstandsdicke (S) aufweisen und ein Verhältnis von Pendelmassendicke (X) zu Abstandsdicke (S) kleiner als 5,25 ist.

7. Fliehkraftpendeleinrichtung (100) nach wenigstens einem der vorhergehenden Ansprüche, **dadurch gekennzeichnet, dass** die Abstandselemente (110, 112, 216, 218, 220, 222) aus einem faserverstärkten Kunststoff hergestellt sind.

8. Fliehkraftpendeleinrichtung nach wenigstens einem der vorhergehenden Ansprüche, **dadurch gekennzeichnet, dass** die Abstandselemente (402, 404) radial innerhalb der Ausnehmungen (212, 214) angeordnet sind.

9. Drehschwingungsdämpfer, insbesondere Zweimassenschwungrad, aufweisend ein Eingangsteil, ein Ausgangsteil, eine Drehachse, um die das Eingangsteil und das Ausgangsteil zusammen drehbar und relativ zueinander begrenzt verdrehbar sind und eine zwischen dem Eingangsteil und dem Ausgangsteil wirksame Feder-Dämpfer-Einrichtung, **dadurch gekennzeichnet, dass** der Drehschwingungsdämpfer eine Fliehkraftpendeleinrichtung (100) nach wenigstens einem der vorhergehenden Ansprüche aufweist.

## Claims

1. Centrifugal force pendulum device (100), in particular for a drive train of a motor vehicle which is driven by internal combustion engine, the centrifugal force pendulum device (100) having a rotational axis, a pendulum mass carrier (102) which can be rotated about the rotational axis, and at least one pendulum mass (104, 106, 200, 300) which is arranged movably on the pendulum mass carrier (102) with the aid of pendulum rollers (108), the at least one pendulum mass (104, 106, 200, 300) having a first end (202), a second end (204) and recesses (212, 214) for the pendulum rollers (108), which recesses (212, 214) are arranged between the ends (202, 204), the centrifugal force pendulum device (100) having spacing sections (110, 112, 216, 218, 220, 222) which are arranged axially between the pendulum mass carrier (102) and the at least one pendulum mass (104, 106, 200, 300), **characterized in that** first spacing elements (216, 218) are arranged between a first recess (212) and the first end (202), second spacing elements (220, 222) are arranged between a second recess (214) and the second end (204), and no spacing elements are arranged between the recesses (212, 214).

2. Centrifugal force pendulum device (100) according to Claim 1, **characterized in that** two first spacing elements (216, 218) are arranged between the first recess (212) and the first end (202), and two second spacing elements (220, 222) are arranged between the second recess (214) and the second end (204).

3. Centrifugal force pendulum device (100) according to at least one of the preceding claims, **characterized in that** the first spacing elements (216, 218) are arranged on a first straight line (224), and the second spacing elements (220, 222) are arranged on a second straight line (226), the first straight line (224) and the second straight line (226) intersect at an intersection point (M), the at least one pendulum mass (104, 106, 200, 300) has a radially outer contour (206) with a circular arc-like shape and a centre point, and the centre point corresponds at least approximately to the intersection point (M) of the first straight line (224) and the second straight line (226).

4. Centrifugal force pendulum device (100) according to at least one of the preceding claims, **characterized in that** the spacing elements (110, 112, 216, 218, 220, 222) in each case have an active face (230, 232, 234, 236), and the pendulum mass carrier (102) or the at least one pendulum mass (104, 106, 200, 300) and the active faces (230, 232, 234, 236) are spaced apart from one another axially at a spacing (L), the spacing elements (110, 112, 216, 218, 220, 222) in each case have an axial spacing thickness (S), and the spacing (L) is from approximately 0.7 times to approximately 1.5 times the spacing thickness (S).

5. Centrifugal force pendulum device (100) according to at least one of the preceding claims, **characterized in that** the spacing elements (110, 112, 216, 218, 220, 222) in each case have an active face (230, 232, 234, 236), and the active faces (230, 232, 234, 236) of all spacing elements (110, 112, 216, 218, 220, 222) which are arranged between the pendulum mass carrier (102).and the at least one pendulum mass (104, 106, 200, 300) have an overall area of approximately n cm².

6. Centrifugal force pendulum device (100) according to at least one of the preceding claims, **characterized in that** the at least one pendulum mass (104, 106, 200, 300) has an axial pendulum mass thickness (X), the spacing elements (110, 112, 216, 218, 220, 222) in each case have an axial spacing thickness (S), and a ratio of the pendulum mass thickness (X) to the spacing thickness (S) is less than 5.25.

7. Centrifugal force pendulum device (100) according to at least one of the preceding claims, **characterized in that** the spacing elements (110, 112, 216, 218, 220, 222) are produced from a fibre-reinforced plastic.

8. Centrifugal force pendulum device according to at least one of the preceding claims, **characterized in that** the spacing elements (402, 404) are arranged radially within the recesses (212, 214).

9. Torsional vibration damper, in particular dual-mass flywheel, having an input part, an output part, a rotational axis, about which the input part and the output part can be rotated together and can be rotated relative to one another to a limited extent, and a spring/damper device which is active between the input part and the output part, **characterized in that** the torsional vibration damper has a centrifugal force pendulum device (100) according to at least one of the preceding claims.

## Revendications

1. Dispositif pendulaire à force centrifuge (100), en particulier pour une chaîne cinématique d'un véhicule automobile entraîné par un moteur à combustion interne, le dispositif pendulaire à force centrifuge (100) présentant un axe de rotation, un support de masse pendulaire (102) pouvant tourner autour de l'axe de rotation et au moins une masse pendulaire (104, 106, 200, 300) disposée de manière déplaçable à l'aide de rouleaux de pendule (108) sur le support de masse pendulaire (102), l'au moins une masse pendulaire (104, 106, 200, 300) présentant une première extrémité (202), une deuxième extrémité (204) et des évidements (212, 214) pour les rouleaux de pendule (108) disposés entre les extrémités (202, 204), le dispositif pendulaire à force centrifuge (100) présentant des éléments d'espacement (110, 112, 216, 218, 220, 222) disposés axialement entre le support de masse pendulaire (102) et l'au moins une masse pendulaire (104, 106, 200, 300), **caractérisé en ce qu'**entre un premier évidement (212) et la première extrémité (202) sont disposés des premiers éléments d'espacement (216, 218), entre un deuxième évidement (214) et la deuxième extrémité (204), des deuxièmes éléments d'espacement (220, 222) et aucun élément d'espacement entre les évidements (212, 214).

2. Dispositif pendulaire à force centrifuge (100) selon la revendication 1, **caractérisé en ce qu'**entre le premier évidement (212) et la première extrémité (202) sont disposés deux premiers éléments d'espacement (216, 218) et entre le deuxième évidement (214) et la deuxième extrémité (204), deux deuxièmes éléments d'espacement (220, 222).

3. Dispositif pendulaire à force centrifuge (100) selon au moins l'une quelconque des revendications précédentes, **caractérisé en ce que** les premiers éléments d'espacement (216, 218) sont disposés sur une première droite (224) et les deuxièmes éléments d'espacement (220, 222) sur une deuxième droite (226), la première droite (224) et la deuxième droite (226) se coupent en un point d'intersection (M), l'au moins une masse pendulaire (104, 106, 200, 300) présente un contour radialement extérieur (206) ayant une forme de type arc de cercle et un centre et le centre correspond au moins approximativement au point d'intersection (M) de la première droite (224) et de la deuxième droite (226).

4. Dispositif pendulaire à force centrifuge (100) selon au moins l'une quelconque des revendications précédentes, **caractérisé en ce que** les éléments d'espacement (110, 112, 216, 218, 220, 222) présentent chacun une surface d'action (230, 232, 234, 236) et le support de masse pendulaire (102) ou l'au moins une masse pendulaire (104, 106, 200, 300) et les surfaces d'action (230, 232, 234, 236) sont espacé(e)s l'un(e) de l'autre axialement d'une distance (L), les éléments d'espacement (110, 112, 216, 218, 220, 222) présentent chacun une épaisseur d'espacement axiale (S) et la distance (L) vaut approximativement 0,7 à approximativement 1,5 fois l'épaisseur d'espacement (S).

5. Dispositif pendulaire à force centrifuge (100) selon au moins l'une quelconque des revendications précédentes, **caractérisé en ce que** les éléments d'espacement (110, 112, 216, 218, 220, 222) présentent chacun une surface d'action (230, 232, 234, 236) et les surfaces d'action (230, 232, 234, 236) de tous les éléments d'espacement (110, 112, 216, 218, 220, 222) disposés entre le support de masse pendulaire (102) et l'au moins une masse pendulaire (104, 106, 200, 300) présentent une surface totale d'environ π cm².

6. Dispositif pendulaire à force centrifuge (100) selon au moins l'une quelconque des revendications précédentes, **caractérisé en ce que** l'au moins une masse pendulaire (104, 106, 200, 300) présente une épaisseur de masse pendulaire axiale (X), les éléments d'espacement (110, 112, 216, 218, 220, 222) présentent chacun une épaisseur d'espacement axiale (S) et un rapport de l'épaisseur de masse pendulaire (X) à l'épaisseur d'espacement (S) est inférieur à 5,25.

7. Dispositif pendulaire à force centrifuge (100) selon au moins l'une quelconque des revendications précédentes, **caractérisé en ce que** les éléments d'espacement (110, 112, 216, 218, 220, 222) sont fabriqués en plastique renforcé par des fibres.

8. Dispositif pendulaire à force centrifuge selon au moins l'une quelconque des revendications précédentes, **caractérisé en ce que** les éléments d'espacement (402, 404) sont disposés radialement à l'intérieur des évidements (212, 214).

9. Amortisseur de vibrations de torsion,, en particulier volant d'inertie à deux masses, présentant une partie d'entrée, une partie de sortie, un axe de rotation autour duquel la partie d'entrée et la partie de sortie peuvent tourner ensemble et peuvent tourner de manière limitée l'une par rapport à l'autre, et un dispositif d'amortisseur à ressort agissant entre la partie d'entrée et la partie de sortie, **caractérisé en ce que** l'amortisseur de vibrations de torsion présente un dispositif pendulaire à ,force centrifuge (100) selon au moins l'une quelconque des revendications précédentes.
